(19) Europäisches Patentamt
European Patent Office
Office européen des brevets

(11) Publication number: **0 192 493**
**B1**

(12) # EUROPEAN PATENT SPECIFICATION

(45) Date of publication of patent specification: **12.10.88**

(51) Int. Cl.$^4$: **C 04 B 41/48,** C 08 L 71/00, C 08 G 65/00

(21) Application number: **86301279.5**

(22) Date of filing: **21.02.86**

(54) **Process for protecting materials from atmospheric agents and pollutants.**

(30) Priority: **22.02.85 IT 1962885**

(43) Date of publication of application:
**27.08.86 Bulletin 86/35**

(45) Publication of the grant of the patent:
**12.10.88 Bulletin 88/41**

(84) Designated Contracting States:
**AT BE CH DE FR GB LI NL**

(56) References cited:
**EP-A-0 059 100**
**EP-A-0 095 825**
**EP-A-0 165 650**
**DE-A-2 633 736**

(73) Proprietor: **AUSIMONT S.p.A.**
**31, Foro Buonaparte**
**I-20121 Milano (IT)**
(73) Proprietor: **CONSIGLIO NAZIONALE DELLE RICERCHE**
**Piazzale Aldo Moro, 7**
**I-00185 Roma (IT)**

(72) Inventor: **Piacenti, Franco**
**79, Via Costa S. Giorgio**
**I-50125 Firenze (IT)**
Inventor: **Pasetti, Adolfo**
**2, Piazza Sesia**
**I-20127 Milan (IT)**
Inventor: **Matteoli, Ugo**
**43, Due Giugno**
**I-50057 Ponte A Elsa Firenze (IT)**
Inventor: **Strepparola, Ezio**
**6, Viale Partigiano**
**I-24067 Treviglio Bergamo (IT)**

(74) Representative: **Whalley, Kevin et al**
**MARKS & CLERK 57/60 Lincoln's Inn Fields**
**London WC2A 3LS (GB)**

**EP 0 192 493 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for protecting materials from atmospheric agents and pullutants, in particular building materials such as marble, stones, tiles, wood and cements.

It is known that perfluoropolyethers impart remarkable hydrophobic properties to the surfaces of materials onto which they are applied. Furthermore, perfluoropolyethers have a high Bunsen coefficient for the air gas components, as a result of which they permit a good penetration of the air through the surface of the treated materials.

These properties render the perfluoropolyethers interesting as liquids suitable for protecting building works and, in general, structures and articles manufactured from stones, marble, cement, tiles or wood from atmospheric agents. Such action is particularly advantageous as the protection is reversible, being based on the deposition of a thin liquid layer onto the article surface, such layer being also removable, if necessary.

Furthermore, the low refraction index of the perfluoropolyethers, which corresponds to a value of about 1.3, measured at 20°C by the light of a sodium lamp, enables the treated structure of article to retain its original appearance, avoiding optical interference phenomena which lead to an alteration of the colours.

The abovesaid use of perfluoropolyethers has been described in European Patent Specification No. 59,100. The perfluoropolyethers described in said Specification No. 59,100 are of the type with so-called neutral end groups, i.e. consisting of perfluoroalkyl groups having a high chemical inertia.

It was observed that the presence of porosity in the material to be protected leads to the phenomenon of slow absorption of the perfluoropolyether of the type used so far, such phenomenon causing a more or less slow migration (depending on the material porosity type) of the protective liquid towards the innermost layers of the manufactured structures. This results in a lower effectiveness, in the long term, of the protection of the outermost areas of the treated structure. While on certain particular materials, such as sandstones, such diffusion effect towards the inside is sufficiently slow as to provide protection stability for a long time, in other cases (for example in tiles) such phenonemon causes a decrease in the surface protective action so as to require, after certain periods of time, further surface treatment, the protection of the underlying layers remaining however sufficient to considerably reduce the alteration phenomena.

It has now been found that it is possible to obtain a permanent protection action for the surface area of the materials mentioned hereinbefore when perfluoropolyether derivatives with functional end groups consisting of free carboxylic acid groups or carboxylic acid groups chemically bound as an ester or amide group, are utilized as protective agents *per se* or as coadjuvants for the protection.

Such functional end groups fix to the substrate to be protected through the formation of chemical bonds or of hydrogen bonds having a sufficient stability, thereby reducing the mobility of the perfluoropolyether and increasing the duration of the protective action on the treated surface.

The other characteristics of use of these perfluoropolyether functional fluids remain similar to those of the perfluoropolyethers indicated in European Patent Specification No. 59,100. In particular, such fluids exhibit:

1) capability of giving rise to a thin, low volatile protective layer, which is resistant to the most aggressive chemical agents, such as acids and alkalis, which results in a high stability to the atmosphere and to the pollutants thereof;
2) high thermal stability and retainment of the fluid state also at low ambient temperature;
3) low surface tension;
4) high water-repellency;
5) high oil-repellency;
6) permeability to air and to water vapour;
7) stability to light radiation and in particular to ultraviolet radiation;
8) reversibility, which remains constant with time.

The present invention provides a process for protecting marble, stones, tiles, wood and cement, and other similar materials utilized in particular in building works, and articles and structures manufactured therefrom, from degradation caused by atmospheric agents and pollutants, by application onto the surfaces of said materials of a protective agent selected from perfluoropolyethers, having functional end groups and belonging to one of the following two classes:

(a) compounds of general formula:

$$\text{(I)} \qquad Rf{-}O{-}(C_3F_6O)_m(CFXO)_n{-}A$$

wherein Rf is a perfluoroalkyl group having 1 to 3 carbon atoms;

$(C_3F_6O)$ and (CFXO) are oxyperfluoroalkylene units statistically distributed along the chain, and X=F or $CF_3$;

m and n are integers or n=0 (m is always not equal to 0) and m/n is from 5 to 40 if n does not equal 0;

A is a group —CFX—COY where X=F or $CF_3$ and Y=OH, OR′, NR″R‴, where R′ may be an alkyl group having 1 to 8 carbon atoms, an aromatic or alkylaromatic group such as difluoro benzyl $—CF_2—C_6H_5$, wherein the aromatic groups may be substituted by alkyl or polyethoxy groups;

R'' may be H or an alkyl group having 1 to 8 carbon atoms or a substituted phenyl group; and R''' may be H or an alkyl group having 1 to 8 carbon atoms or a substituted phenyl group; the average molecular weight being from 500 to 10,000, preferably from 900 to 6000.

(b) compounds of general formula:

$$\text{(II)} \qquad A'—(C_2F_4O)_p(CF_2O)_q—A'$$

wherein the units $(C_2F_4O)$ and $(CF_2O)$ are statistically distributed along the chain;
p and q are integers such that p/q is from 2 to 0.5, preferably from 1 to 0.6;
A'=—$CF_2$—COY, where Y is as defined hereinabove;
the average molecular weight being from 1,000 to 20,000, preferably from 1,800 to 12,000.

The compounds of classes I and II can be applied as such or diluted with a solvent or a mixture of solvents, preferably a fluorocarbide or a fluorochlorocarbide. The compounds of classes I and II may be suitably dissolved in fluorocarbides or fluorochlorocarbides, with a boiling point being preferably not higher than 80°C.

Furthermore, the perfluoropolyethers of formula I and II can be used in admixture with perfluoropolyethers having neutral end groups, selected from one of the following classes III or IV:

$$\text{(III)} \qquad Rf—O—(C_3F_6O)_m(CFXO)_nRf'$$

wherein $(C_3F_6O)$ and (CFXO) are units statistically distributed along the chain;
Rf' may be like or unlike Rf and both are selected from $CF_3$, $C_2F_5$ and $C_3F_7$;
X=F or $CF_3$;
m is an integer, and n is an integer or 0;
wherein when n=0, Rf and Rf' are $C_2F_5$ or $C_3F_7$;
and wherein when n does not equal 0, the m/n ratio is from 5 to 40;
the average molecular weight being from 4,000 to 10,000.

$$\text{(IV)} \qquad CF_3—(C_2F_4O)_p(CF_2O)_qCF_3$$

wherein units $(C_2F_4O)$ and $(CF_2O)$ are statistically distributed along the chain and p and q are the same as defined hereinabove;
the molecular weight being from 4,000 to 16,000.

The weight ratio between the compounds having functional end groups of type I or II and the compounds having neutral end groups of type III or IV expressed as I+II/III+IV is equal to or greater than 0.01.

The application of compounds I, II either in the presence or in the absence of compounds III, IV is preferably carried out in a 1,1,2 - trifluorotrichloroethane solution containing 50 to 80% by weight of perfluoropolyether products, and the application can be suitably accomplished by spraying an atomised liquid jet with or without compressed air, or by means of another suitable method.

By the process according to the present invention it is possible to obtain a better protection of structures and articles manufactured from stone, marble, tiles, cement and wood as compared with the use of the perfluoropolyethers as described in European Patent Specification No. 59,100. Such better protection is achieved through the use of products having a telomer structure containing a chain of the perfluoropolyether type similar to that according to the above-mentioned Patent Specification No. 59,100 and having functional end groups capable of exerting an anchoring action on the article surface, thus rendering the surface protection action more stable in the long term.

The amount of perfluoropolyether protective agent to be used mainly depends on the nature of the material to be treated, in particular on its porosity. Such amount may range from amounts lower than 10 g/m$^2$ for very compact materials (Carrara marble) up to 300 g/m$^2$ and above for very porous materials.

The invention will be further described with reference to the following illustrative Examples.

Example 1

Two Carrara marble samples having the same composition, a porosity less than 1% and a cubic form of 50 mm side were taken.

One of the samples was surface-treated with a derivative of a perfluoropolyether of type I having an acid end group converted into isobutylamide, having an average molecular weight of 5,000, while the other sample was left untreated as a comparison.

The perfluoropolyether isobutylamide derivative was applied by using a compressed air sprayer in such manner so as to cause an amount of protective fluid equal to 30 g/m$^2$ to deposit onto the sample surface. After seven days, the amount of water absorbed was measured for each of the two samples. Such measurements was effected by applying to a face of each sample a device consisting of a glass cylinder full of water and connected with a graduated micropipette which permits measurement of the water amount absorbed by the surface in contact with said sample. This device is described in further detail in the

document published by the group Unesco-Rilem PEM, No. 78/182. The absorbed water amount is read at pre-established intervals of time and the read value is expressed in microliters/cm$^2$ of surface.

In the treated sample, the water absorbed per cm$^2$ was practically equal to zero up to a time of 30 minutes; in the untreated sample the absorbed amounts were 1.5 after 10 minutes, 4.6 after 20 minutes and 7.6 after 30 minutes (expressed in microliters per cm$^2$).

From a comparison between the two samples it is apparent that the surface treatment with the protective agent strongly reduces the water penetration speed into the stone inside.

Example 2

From an organogen limestone block (Vicenza stone) there were cut two cubic samples of 2.5 cm side. After determination of the porosity, which was found to be on average 30%, one of the samples was treated on its entire surface with an amount equal to 300 g/m$^2$ of the isobutylester derivative of a perfluoropolyether of type I, having a molecular weight equal to 5,000.

The other sample was left untreated as a comparison. Subsequently both samples were thoroughly immersed into deionized water and then drawn out, weighed and immersed again, at pre-established intervals of time (10, 40, 80, 160, 300, 1440 minutes, and so on until saturation).

The results of the tests are given in the following table, which shows the imbibition coefficients on the basis of the prefixed times.

| Times | 10′ | 40′ | 80′ | 160′ | 5h | 24h | 170h | 1700h |
|---|---|---|---|---|---|---|---|---|
| treated | 0.30 | 0.62 | 1.24 | 2.27 | 2.92 | 4.57 | 6.26 | 9.65 |
| untreated | 9.25 | 9.54 | 9.63 | 9.67 | 10.14 | 10.31 | 11.41 | 12.79 |

The imbibition coefficient is expressed by the grams of water absorbed for 100 grams of dry sample.

From a comparison of the two samples there are apparent both the high effectiveness of the protective agent, even with a highly porous lithoid material, and the considerable kinetic effect of hindering the inlet of water even for periods of time of the order of 24 hours.

Example 3

There were prepared four samples of Carrara marble (porosity less than 1%) having the shape of a disc, a 4 mm thickness and a 2.5 cm diameter. One of the two flat surfaces of three samples (leaving the fourth as a comparison) was treated with amounts of protective agent corresponding to 30 g/m$^2$, i.e. equal to the amount which provided satisfactory results for the protection.

The protective agents employed on the various samples were:

sample 1—isobutylamide derivative of a perfluoropolyether of type II and having an average molecular weight of 1,090;

sample 2—terbutylamide derivative of a perfluoropolyether of type I and having an average molecular weight of 600;

sample 3—isobutylester derivative of a perfluoropolyether of type I and having a molecular weight of less than 5,000;

sample 4—untreated (comparison).

The individual samples were subjected to a water vapour permeability test, which was carried out as follows: each sample was fixed by means of a sealing agent to a Plexiglass container.

Into the container there were previously introduced 2.5 cm$^3$ of water, and the whole was weighed and then introduced into a calcium chloride-drier.

At prefixed intervals of time the sample-container group was weighed. The tests were conducted at a constant temperature of 20°C. The test was interrupted after 144 hours and the final weight losses were respectively as follows:

sample 1—0.103 g equal to 92% of the comparison sample;
sample 2—0.097 g equal to 87% of the comparison sample;
sample 3—0.093 g equal to 83% of the comparison sample;
sample 4—0.112 g (comparison sample).

The results of this example show, for all the products tested, that the permeability to water vapour remains, after the treatment, considerably high with respect to the untreated stone material.

Example 4

Three samples of "Serena" stone and three samples of Carrara "marble for statues" were respectively treated with the same three perfluoropolyethereal derivatives used in Example 3.

The application was carried out by means of a brush until the protective agent amount deposited on the sample surface was equal to 30 g/m$^2$ in the case of the "marble for statues" and to 60 g/m$^2$ in the case of

the "Serena" stone. The samples were then subjected to U.V. radiation by means of a low pressure mercury vapour lamp of "Duro-Test International", type TL 20/80 (F20T12BLB), 20 Watts. The samples were placed at a distance of 20 cm from the lamp and irradiation was carried on during 72 hours at a temperature of 40°C. After such test, no variations in the natural colour of the treated surfaces were observed, nor traces of stone alteration products (for example fluorite), nor traces of protective agents; alterations were found through difractometric X-ray analyses and through IR spectroscopy.

Example 5

On the same samples utilized in Example 4 and after the ultraviolet light treatment, the following test was conducted: from the individual samples, according to a "compress" method and using trichlorotrifluoroethane as a solvent, there were extracted the protective agents employed; analyses carried out by infrared spectroscopy on portions of sample surfaces, before and after the extraction of the protective agent, showed the complete removal of the protective treatment and, as a consequence, the complete reversibility even after exposure to ultraviolet light.

Example 6

Two Carrara marble samples of cubic shape with a 5 cm side were respectively treated, on one face, with:

sample 1—perfluoropolyether "Fomblin Met®" produced by Montefluos S.p.A., Milan, in amounts equal to 30 g/m$^2$. "Fomblin Met" is a mixture consisting of 30 parts by weight of $CF_2Cl—CFCl_2$ and of 70 parts by weight of Fomblin YR (perfluoropolyether of type III), which, in its turn, is a perfluoropolyether having an average molecular weight of about 6,000 and a kinematic viscosity of about 1,000 cSt and neutral end groups;

sample 2—isobutylamide derivative of a perfluoropolyether of type I, and having a molecular weight of 600, in amounts equal to 30 g/m$^2$.

The two samples were allowed to stand, taking care to maintain the treated surfaces in an upright position. After respectively 15, 30 and 60 days from the treatment, from each of the two samples a 3 mm thick slice was separated (by sawing), the cut being done according to a plane perpendicular (i.e. in the protective agent diffusion direction) to the face treated with the protective agent. Onto the slices so obtained, a very thin layer of metal gold was deposited by using a common high-vacuum metalizer, type "Galileo" V 201r/00440. As metalization occurred only on the areas not impregnated with the protective agent, such method evidenced the advancement front of the protective agent. The advancement depths (expressed in mm) of the two protective agents in the samples was found to be as follows:

| Days | 15 | 20 | 60 |
|---|---|---|---|
| sample 1 | 3.0 | 5.1 | 6.5 |
| sample 2 | 1.1 | 1.2 | 1.2 |

The results of this example show the higher permanence (lesser mobility), in the surface area of the stone material, of a functional protective agent according to the present invention with respect to a non-functional perfluoropolyether.

## Claims

1. A process for protecting materials, particularly building materials and articles and structures manufactured therefrom, from degradation caused by atmospheric agents and pollutants, by applying onto the surface of a said material a protective agent selected from perfluoropolyethers, characterized in that the perfluoropolyether is selected from one of the following two classes:

(a) compounds of general formula:

$$(I) \qquad Rf—O—(C_3F_6O)_m(CFXO)_n—A$$

wherein Rf is a perfluoroalkyl group having 1 to 3 carbon atoms;

$(C_3F_6O)$ and $(CFXO)$ are oxyperfluoroalkylene units statistically distributed along the chain, and X=F or $CF_3$;

m and n are integers of n=0 and m/n is from 5 to 40 if n does not equal 0;

A is a group $—CFX—COY$ where X=F or $CF_3$ and Y=OH, OR′ or NR″R‴, where R′ may be an alkyl group having 1 to 8 carbon atoms, an aromatic or alkylaromatic group, wherein the aromatic groups may be substituted by alkyl or polyethoxy groups;

R″ may be H or an alkyl group having 1 to 8 carbon atoms or a substituted phenyl group; and R‴ may be H or an alkyl group having 1 to 8 carbon atoms or a substituted phenyl group;

the average molecular weight being from 500 to 10,000;

(b) compounds of general formula:

$$\text{(II)} \qquad A'—(C_2F_4O)_p(CF_2O)_q—A'$$

wherein units ($C_2F_4O$) and ($CF_2O$) are statistically distributed along the chain;
p and q are integers such that p/q is from 2 to 0.5;
A'=—$CF_2$—COY, where Y is as defined hereinabove;
the average molecular weight being from 1,000 to 20,000;
the said perfluoropolyether being applied as such or diluted with a solvent or a mixture of solvents.

2. A process as claimed in claim 1, characterized in that the perfluoropolyether of general formula I or II is used in admixture with a perfluoropolyether having neutral end groups and selected from one of the following classes:

$$\text{(III)} \qquad Rf—O—(C_3F_6O)_m(CFXO)_n—Rf'$$

wherein ($C_3F_6O$) and (CFXO) are units statistically distributed along the chain;
Rf' may be like ur unlike Rf and both are selected from $CF_3$, $C_2F_5$ and $C_3F_7$;
X=F or $CF_3$;
m is an integer; and n is an integer or 0;
wherein when n=0, Rf and Rf' are $C_2F_5$ or $C_3F_7$;
and wherein when n does not equal 0, the m/n ratio is from 5 to 40;
the average molecular weight being from 4,000 to 10,000;

$$\text{(IV)} \qquad CF_3—(C_2F_4O)_p(CF_2O)_qCF_3$$

wherein units ($C_2F_4O$) and ($CF_2O$) are statistically distributed along the chain and p and q are the same as defined hereinbefore;
the molecular weight being from 4,000 to 16,000.

3. A process as claimed in claim 2, characterized in that the weight ratio between perfluoropolyethers having functional end groups and perfluoropolyethers having neutral end groups is equal to or greater than 0.01.

4. A process as claimed in any of claims 1 to 3, characterized in that the average molecular weight of the compound of formula I is from 900 to 6,000.

5. A process as claimed in any of claims 1 to 4, characterized in that the average molecular weight of the compound of formula II is from 1,800 to 12,000.

6. A process as claimed in any of claims 1 to 5, characterized in that, in the compound of formula I, R' is difluorobenzyl —$CF_2$—$C_6H_5$.

7. A process as claimed in any of claims 1 to 6, characterized in that, in the compound of formula II, the ratio p/q is from 1 to 0.6.

8. A process as claimed in any of claims 1 to 7, characterized in that the said solvent with which the perfluoropolyether is diluted is a fluorocarbide or a fluorochlorocarbide.

**Patentansprüche**

1. Verfahren zum Schutz von Materialien, insbesondere Baumaterialien und daraus hergestellten Gegenständen und Strukturen, vor dem durch Umwelteinflüsse und Schadstoffe verursachten Abbau durch Auftragen eines aus Perfluorpolyethern ausgewählten Schutzmittels auf die Oberfläche dieses Materials, dadurch gekennzeichnet, daß der Perfluorpolyether ausgewählt wird aus einer der zwei folgenden Klassen:

(a) Verbindungen der allgemeinen Formel:

$$\text{(I)} \qquad Rf—O—(C_3F_6O)_m(CFXO)_n—A$$

in welcher Rf eine Perfluoralkylgruppe mit 1 bis 3 Kohlenstoffatomen ist;
($C_3F_6O$) und (CFXO) statistisch entlang der Kette verteilte Oxyperfluoralkyleneinheiten bedeuten und X=F oder $CF_3$;
m und n ganze Zahlen sind oder n=0 und m/n einen Wert von 5 bis 40 hat, falls n nicht gleich 0 ist;
A eine Gruppe —CFX—COY darstellt, wobei X=F oder $CF_3$ und Y=OH, OR' oder NR''R''', worin R' eine Alkylgruppe mit 1 bis 8 Kohlenstoffatomen, eine aromatische oder alkylaromatische Gruppe, worin die aromatischen Gruppen durch Alkyl oder Polyethoxygruppen substituiert sind, sein kann;
R'' H oder eine Alkylgruppe mit 1 bis 8 Kohlenstoffatomen oder eine substituierte Phenylgruppe sein kann; und
R''' H oder eine Alkylgruppe mit 1 bis 8 Kohlenstoffatomen oder eine substituierte Phenylgruppe sein kann;
wobei das durchschnittliche Molekulargewicht von 500 bis 10 000 beträgt;

(b) Verbindungen der allgemeinen Formel:

$$\text{(II)} \qquad A'—(C_2F_4O)_p(CF_2O)_q—A'$$

in welcher die Einheiten $(C_2F_4O)$ und $(CF_2O)$ statistisch entlang der Kette verteilt sind;
p und q solche ganze Zahlen sind, daß p/q von 2 bis 0.5 ist;
$A'=—CF_2—COY$, wobei Y wie oben definiert ist;
wobei das durchschnittliche Molekulargewicht von 1000 bis 20 000 beträgt;
wobei der Perfluorpolyether als socher oder mit einem Lösungsmittel oder einer Lösungsmittelmischung verdünnt aufgetragen wird.

2. Verfahren wie in Anspruch 1 beansprucht, dadurch gekennzeichnet, daß der Perfluorpolyether der allgemeinen Formel (I) oder (II) verwendet wird, in Mischung mit einem Perfluorpolyether, der neutrale Endgruppen aufweist und ausgewählt ist aus einer der folgenden Klassen;

$$\text{(III)} \qquad Rf—O—(C_3F_6O)_m(CFXO)_n—Rf'$$

worin $(C_3F_6O)$ und (CFXO) statistisch entlang der Kette verteilte Einheiten sind;
Rf' gleich oder verschieden von Rf sein kann und beide ausgewählt sind aus $CF_3$, $C_2F_5$ und $C_3F_7$;
$X=F$ oder $CF_3$;
m eine ganze Zahl ist; und n eine ganze Zahl oder 0 bedeutet;
wobei wenn n=0, Rf und Rf' $C_2F_5$ oder $C_3F_7$ sind;
und wobei wenn n nicht gleich 0 ist, das Verhältnis m/n von 5 bis 40 beträgt;
wobei das durchschnittliche Molekulargewicht von 4000 bis 10 000 ist;

$$\text{(IV)} \qquad CF_3—(C_2F_4O)_p(CF_2O)_qCF_3$$

worin die Einheiten $(C_2F_4O)$ und $(CF_2O)$ statistisch entlang der Kette verteilt sind und p und q wie oben definiert sind;
wobei das Molekulargewicht von 4000 bis 16 000 ist.

3. Verfahren wie in Anspruch 2 beansprucht, dadurch gekennzeichnet, daß das Gewichtsverhältnis zwischen Perfluorpolyethern mit funktionellen Endgruppen und Perfluorpolyethern mit neutralen Endgruppen gleich oder größer als 0,01 ist.

4. Verfahren wie in irgendeinem der Ansprüche 1 bis 3 beansprucht, dadurch gekennzeichnet, daß das durchschnittliche Molekulargewicht der Verbindung der Formel (I) von 900 bis 6000 beträgt.

5. Verfahren wie in irgendeinem der Ansprüche 1 bis 4 beansprucht, dadurch gekennzeichnet, daß das durchschnittliche Molekulargewicht der Verbindung der Formel (II) von 1800 bis 12 000 beträgt.

6. Verfahren wie in irgendeinem der Ansprüche 1 bis 5 beansprucht, dadurch gekennzeichnet, daß in der Verbindung der Formel (I) R' Difluorbenzyl, $—CF_2—C_6H_5$, bedeutet.

7. Verfahren wie in irgendeinem der Ansprüche 1 bis 6 beansprucht, dadurch gekennzeichnet, daß in der Verbindung der Formel (II) das Verhältnis p/q von 1 bis 0,6 beträgt.

8. Verfahren wie in irgendeinem der Ansprüche 1 bis 7 beansprucht, dadurch gekennzeichnet, daß das Lösungsmittel, mit welchem der Perfluorpolyether verdünnt wird, ein Fluorcarbid oder ein Fluorchlorcarbid ist.

## Revendications

1. Un procédé de protection de matériaux, notamment de matériaux de construction ainsi que des produits et structures obtenus à partir de ceux-ci contre la dégradation provoquée par les polluants et agents atmosphériques consistant à appliquer sur la surface desdits matériaux un agent protecteur choisi parmi les perfluoropolyether caractérisés en ce que le perfluoropolyether appartient à l'une des deux classes suivantes:

a) les composés de formule générale:

$$\text{(I)} \qquad Rf—O—(C_3F_6O)_m(CFXO)_n—A$$

dans laquelle:
Rf est un groupe perfluoroalkyl comprenant 1 à 3 atomes de carbone;
$(C_3F_6O)$ et (CFXO) sont des radicaux oxyperfluoroalkylène répartis de façon statistique dans la chaine, et
$X=F$ ou $CF_3$;
m et n sont des nombres entiers ou n=0 et m/n est compris entre 5 et 40 et n est différent de 0;
A est un groupe —CFX—COY où X=F ou $CF_3$ et Y=OH, OR' ou NR''R''' avec R' pouvant être un radical alkyle comportant 1 à 8 atomes de carbone, un radical aromatique ou un radical alkyl aromatique dans lequel les groupes aromatiques peuvent être sustitués par des groupes alkyles ou polyethoxy;

R'' est un atome d'hydrogène, un radical alkyle comportant 1 à 8 atomes de carbone ou un radical phenyl substitué; et R''' est un atome d'hydrogène, un radical alkyle comportant 1 à 8 atomes de carbone ou un radical phenyl substitué, dont le poids moléculaire moyen est compris entre 500 et 10 000

b) les composés de formule générale

$$\text{(II)} \qquad A'—(C_2F_4O)_p(CF_2O)_q—A$$

dans laquelle:

les groupes $(C_2F_4O)$ et $(CF_2O)$ sont répartis de façon statistique dans la chaine;

p et q sont des nombres entiers tel que p/q soit compris entre 2 et 0,5

$A'=—CF_2—COY$ avec Y tel que défini ci-dessus dont le poids moléculaire est compris entre 10 000 et 20 000;

ce perfluoropolyether étant appliqué tel que ou à l'état dilué dans un solvant un mélange de solvants.

2. Un procédé tel que revendiqué dans la revendication 1 caractérisé en ce que le perfluoropolyether présentant la formule générale I ou II est utilisé en association avec un perfluoropolyether comprenant des groupes extrêmes neutres, choisi dans les classes des formules suivantes:

$$\text{(III)} \qquad Rf—O—(C_3F_6O)_m(CFXO)_n—Rf'$$

dans laquelle:

les groupes $(C_3F_6O)$ et $(CFXO)$ sont répartis de façon statistique dans la chaine;

Rf', identique ou différent de Rf, sont tous deux choisis dans le groupe comprenant $CF_3$, $C_2F_5$ et $C_3F_7$;

$X=F$ ou $CF_3$

m est un nombre entier; et

n est un nombre entier ou est égal à 0;

avec lorsque n est égal à 0, Rf et Rf' étant $C_2F_5$ ou $C_3F_7$; et lorsque n est différent de 0, le rapport m/n étant compris entre 5 et 40

le poids moléculaire moyen étant compris entre 4000 et 10 000:

$$\text{(IV)} \qquad CF_3—(C_2F_4O)_p(CF_2O)_qCF_3$$

dans laquelle:

les groupes $(C_2F_4O)$ et $(CF_2O)$ sont répartis de façon statistique dans la chaine; et

p et q sont tels que définis ci-dessus

le poids moléculaire moyen étant compris entre 4000 et 16 000.

3. Un procédé tel que revendiqué dans la revendication 2 caractérisé en ce que le rapport pondéral entre perfluoropolyethers comprenant des groupes extrêmes fonctionnels et perfluoropolyethers comprenant des groupes extrêmes neutres est égal ou supérieur à 0,01.

4. Un procédé tel que revendiqué dans les revendications 1 à 3 caractérisé en ce que le poids moléculaire du composé de formule I est compris entre 900 et 6000.

5. Un procédé tel que revendiqué dans les revendications 1 à 4 caractérisé en ce que le poids moléculaire du composé de formule II est compris entre 1800 et 12 000.

6. Un procédé tel que revendiqué dans les revendications 1 à 5 caractérisé en ce que dans le composé de formule I, R' consiste en le difluorobenzyl $—CF_2—C_6H_5$.

7. Un procédé tel que revendiqué dans les revendications 1 à 6 caractérisé en ce que dans le composé de formule II, le rapport pondéral p/q est compris entre 1 et 0,6.

8. Un procédé tel que revendiqué dans les revendications 1 à 7 caractérisé en ce que le solvant précité dans lequel le perfluoropolyether est dilué est un fluorocarbure ou un fluorochlorocarbure.